# EUROPEAN PATENT SPECIFICATION

(11) **EP 4 158 394 B1**
(45) Date of publication and mention of the grant of the patent: **29.04.2026**
(21) Application number: 21817820.0
(22) Date of filing: 21.04.2021
(51) Int. Cl.: G06T 5/50, G06T 5/92, G02B 5/02, G02B 5/26, G02B 26/00, G03B 11/06, G03B 17/12, H04N 23/55, H04N 23/67, H04N 23/81

(54) **APPARATUS AND METHOD TO OBTAIN INTRINSIC STILL AND VIDEO IMAGES WITHOUT THE USE OF FILTERS OR DICHROIC MIRRORS**
VORRICHTUNG UND VERFAHREN ZUR GEWINNUNG INTRINSISCHER STAND- UND VIDEOBILDER OHNE VERWENDUNG VON FILTERN ODER DICHROITISCHEN SPIEGELN
APPAREIL ET PROCÉDÉ PERMETTANT D'OBTENIR DES IMAGES FIXES ET VIDÉO INTRINSÈQUES SANS UTILISER DE FILTRES OU DE MIROIRS DICHROÏQUES

(30) Priority: 30.05.2020 US 202016888660
(43) Date of publication of application: 05.04.2023
(73) Proprietor: Center for Quantitative Cytometry, San Juan, PR 00919 (US)
(72) Inventor: SCHWARTZ, Abraham, San Juan, PR 00918 (US); SHERMAN, Philip, Cleveland Hts. Laurel, OH 44118-1852 (US); FERNANDEZ REPOLLET, Emma, San Juan, PR 00918 (US)
(74) Representative: Toro Gordillo, Ignacio Maria
(86) International application number: PCT/US2021/028281
(87) International publication number: WO 2021/247157

(56) References cited:
- US-A- 5 317 140
- US-A1- 2013 089 256
- US-A1- 2015 192 465
- US-B1- 10 652 484
- US-B1- 7 701 489
- US-B1- 7 701 489
- TAKAMATSU T ET AL: "High temporal resolution video imaging of intracellular calcium", CELL CALCIUM, ELSEVIER, AMSTERDAM, NL, vol. 11, no. 2-3, 1 February 1990 (1990-02-01), pages 111 - 120, XP026208434, ISSN: 0143-4160, [retrieved on 19900201], DOI: 10.1016/0143-4160(90)90064-2
- HARRY G. BARROW, TENENBAUM, J.MARTIN: "Recovering intrinsic scene characteristics from images", RESEARCH REPORT - ARTIFICIAL INTELLIGENCE CENTER, SRI INTERNATIONAL, 1 January 1978 (1978-01-01), XP055015607, Retrieved from the Internet <URL:http://www.ai.sri.com/pubs/files/737.pdf> [retrieved on 20120103]
- CHEN ET AL.: "A Simple Model for Intrinsic Image Decomposition with Depth Cues", PROCEEDINGS OF THE IEEE INTERNATIONAL CONFERENCE ON COMPUTER VISION (ICCV, December 2013 (2013-12-01), pages 241 - 248, XP032572764, DOI: 10.1109/ICCV.2013.37

## Description

### TECHNICAL FIELD

The invention relates to an apparatus and method to obtain intrinsic images and videos by eliminating the irrelevant illumination without the use of filters and dichroic mirrors.

### BACKGROUND OF THE INVENTION

The primary goal of imaging is to obtain high-quality images and videos. Advancements toward this goal have been to improve cameras with respect to the optics and exposure mechanisms. Digital cameras with various pixel sensor arrays have greatly contributed to this effort. However, these efforts do not address spectral components that interfere with the quality of the image.

Normally conducting fluorescence imaging employs a narrow wavelength range of illumination directed towards a material to excite the molecular structure of the material. The resulting spectrum contains the emission components while eliminating the illumination component wavelengths by the use of dichroic mirrors and barrier filters. This results in a spectrum containing only spectral emission components.

Recently, methods have been developed where ordinary cameras have been shown to obtain intrinsic fluorescence images without the use of filters and dichroic mirrors. These patented methods describe how irrelevant illumination, i.e., components not absorbed by materials in the field of view, can be removed from the image by Intrinsic Processing. The specific imaging processes presented in these patents eliminate the irrelevant illumination and instrument spectral components, but the method to obtain the data varies and is not the most practical. For example, one method (US 9,435,687 and US 9,998,636) requires four different fields of view and two different cameras. An improved method, (US 10,652,484) requires only one field of view and one camera, but images of the field of view must be taken with the field of view focused and defocused. While requiring only a single field of view, it is cumbersome to have to manually defocus the camera and risk shifting the field of view thus introducing errors into the processing. In addition, at low magnifications and high F stops, cameras may not have enough focal adjustment to completely eliminate the spatial detail in the field of view.

Patent document US 10,652,484, Schwartz et al, discloses the generation of intrinsic images wherein the pixel intensities of defocused images are subtracted from focused images Patent document US 2015/0192465 A1 to Golub, et al. discloses a system and method for snapshot spectral imaging (SSI) using a standard digital camera incorporating a Restricted Isometry Property (RIP) diffuser to capture a "spectral cube" of spatial and spectral data in a single shot. Leveraging compressed sensing (CS) principles, the diffuser produces a dispersed image containing mixed spatial and spectral information, which is reconstructed into spectral images using mathematical algorithms like Bregman iteration. A "dispersed image" refers to a diffusely-dispersed image created by an optical system with the RIP diffuser and obtained at a dispersed image sensor. A snapshot spectral imager for obtaining spectral images of a source object comprising an imaging lens, a dispersed image sensor, and a RIP diffuser inserted in an optical path between the source object and the dispersed image sensor, wherein the snapshot spectral imager is configured to obtain at the dispersed image sensor a dispersed image formed through the imaging lens and the RIP diffuser, and wherein the snapshot spectral imager is further configured to process the dispersed image to provide a plurality of spectral images of the source object.

Patent document US 7,701,489 B1 to Christie, et al. describes a method and apparatus for performing automatic color correction in digital cameras using a translucent diffuser of a known color. The diffuser, placed in front of the camera lens, diffuses ambient light to determine color correction information by comparing the captured light with the diffuser's known color under standard lighting conditions. This eliminates assumptions used in conventional software-based correction methods, enabling accurate color adjustment based on the actual lighting environment. The diffuser can move out of the light path during image capture, and the gathered color correction data is used to correct the image, ensuring consistent and accurate color balance.

Takamatsu, et al ("High temporal resolution video imaging of intracellular calcium". Cell Calcium. 1990 Feb-Mar;11(2-3):111-20. doi: 10.1016/0143-4160(90)90064-2. PMID: 2354495.) discuses a system for imaging intracellular free calcium ion concentration ([Ca²⁺]i) at the highest rate possible with conventional video equipment. The system is intended to facilitate quantitative study of rapid changes in [Ca²⁺]i in cells that move. It utilizes intensified video cameras with nearly ideal properties and digital image processing to produce two images that can be ratioed without artifacts. Two dichroic mirrors direct images of cellular Indo-1 fluorescence at two different wavelengths to two synchronized video cameras, each consisting of a fast micro-channel plate image intensifier optically coupled with a tapered fiber optic bundle to a CCD image sensor. The critical technical issues in this dual-image system are: (1) minimization and correction of the small geometric and other types of differences in the images provided by the two cameras; and (2) the signal-to-noise ratio that can be achieved in single frames. The system obtained images of [Ca²⁺]i at 16.7 ms intervals in voltage-clamped single cardiac cells perfused internally with Indo-1 (pentapotassium salt). The images indicate that, except for the nuclear regions, [Ca²⁺]i is uniform during normal excitation-contraction coupling. In contrast, changes in [Ca²⁺]i propagate in rapid 'waves' during the spontaneous release of Ca²⁺ that accompanies certain 'Ca²⁺-overload conditions.

The ability to obtain intrinsic images with ordinary cameras can be valuable to any field that relies on obtaining intrinsic information with respect to identifying and validating the materials of interest. These fields include, but are not limited to, imaging in geology, forensics, agriculture, biology, astronomy, surveillance, meteorology, oceanography, and medicine.

Although the previous patented methods do produce Intrinsic images, the multiple fields needed for calibration, target and reference made data acquisition complex and difficult. The present invention provides a significant technological improvement and simplification in data gathering and processing for subsequent intrinsic image generation and visual display.

### SUMMARY OF THE INVENTION

The present invention provides an apparatus and method to generate intrinsic images without barrier filters and dichroic mirrors. It involves acquisition of a focused field of view, followed by obtaining a diffused image of the same field of view, or vice versa. The diffused image is obtained by placing a translucent material in the path between the camera and field of view. The translucent material permits transmission of the illumination energy while diffusing the spatial details of the field of view, thus producing a featureless image of illumination intensities.

It is important that the diffused image of the same field of view preserves the characteristics of the illumination, for example, intensity gradients being the same as those of the focused image. Sets of said focused and diffused images may then be processed by two methods to produce intrinsic images.

The criteria of the translucent material necessary to produce a useful or optimal diffused image according to the present invention are:
1. The translucent material must pass all wavelengths of the illumination.
2. The resulting diffused image must not contain any spatial features of the focused image.
3. The diffused image must have the same illumination intensity distribution as the focused image, i.e., the same intensity gradient.
4. The translucent material must pass the illumination wavelength range proportionally, i.e., must not adsorb or emit disproportionately e.g., the translucent material must not have fluorescent properties.

The invention is set out in the appended set of claims.

### Modes of the Invention

The invention applies to single-frame and multi-frame image acquisition, specifically, but not limited to, single exposure, multi-spectral, hyper-spectral and video acquisition. The structural format of the apparatus may be (1) separate and placed over the lens of a camera, (2) attached or incorporated into the camera or (3) provided to hold the camera. The position of the translucent material may be located and manipulated outside of the camera or within the body of the camera. For the purpose of the invention, the terms camera and image capturing device are non-limiting examples that are interchangeably used throughout the specification and are intended to cover other devices that are capable of acquiring images through a lens. Microscopes, telescopes, drone cameras, mirror-less cameras and satellites are non-limiting embodiments also covered by the instant invention.

Each set of a focused and a diffused image of a field of view is processed by software to eliminate the irrelevant illumination, i.e., non-absorbed illumination wavelengths, and illumination variation caused by transmission through the translucent material. Each set of images may undergo Simple Intrinsic Processing, where the intensity of each pixel of the diffused image is subtracted from the corresponding intensity of the focused pixel, or Advanced Intrinsic Processing, where the intensity of the residual components generated due to the illumination passing through the translucent material is also subtracted pixel by pixel from the focused image. When the calibrated residual is determined to have a low contribution, e.g., less than 5% of the illumination, due to the translucent material and automatic camera adjustments, the Simple method of processing may be deemed adequate.

### BRIEF DESCRIPTION OF THE DRAWINGS

Further features and advantages of the invention will become apparent from the following detailed description taken in conjunction with the accompanying figures showing illustrative embodiments of the invention, in which:
Figures 1a and 1b show an apparatus with one end covered by a translucent material that is placed over the lens of a camera.
Figures 2a and 2b show another embodiment of the apparatus that is attached to the lens of a camera or telescope that has a translucent material that can be moved out of and into the path between the lens and the field of view.
Figures 3a-3c show another embodiment of the apparatus that holds a Smart Phone or Tablet equipped with a self-adjusting camera and a translucent material that may be moved out of and into the path between the camera lens and the field of view.
Figures 4a and 4b show another embodiment of the apparatus that holds a Smart phone equipped with a self-adjusting camera and a translucent material that may be moved out of and into the path between the camera lens and the field of view.
Figures 5a-5c shows an apparatus that attaches to a [2] video camera with a [1] rotating wheel with holes along its rim that are covered with a [3] translucent material on alternating opens.
Figure 6a shows the focused image of Tremolite, a fluorescent mineral, illuminated by 390 nm UV light.
Figure 6b shows the same mineral of Figure 6a imaged through translucent white paper. After simply processing the illumination undergoes total absorption by the mineral without any emission components.
Figure 7a shows the focused image of Tremolite, fluorescent mineral, illuminated by 390 nm UV light.
Figure 7b shows the same mineral of Figure 7a imaged through translucent polyethylene. After simply processing the image reveals elimination of the irrelevant illumination and strong emission by the mineral.
Figure 8a shows a calibration image of the focused clear sky.
Figure 8b shows a calibration image of the diffused sky, according to the present invention.
Figure 8c shows a calibration image after processing that is the Residual image representing the intensity difference due to the illumination passing through the translucent material.
Figure 9a shows the focused image of a leaf illuminated by direct sunlight, the white line indicates the row of pixels (row 1900 from columns 1000 - 2000)to be analyzed.
Figure 9b shows the diffused image of the leaf of Figure 9a, the white line indicates the row of pixels (row 1900 from columns 1000 - 2000)to be analyzed.
Figure 9c shows the image of the leaf of Figure 9a after Intrinsic processing, the white line indicates the row of pixels (row 1900 from columns 1000 - 2000)to be analyzed.
Figure 10a shows plots of unprocessed focused intensities, Simple Processing and Advanced Processing across the row of pixels of the analysis area indicated by the white line in the images in Figure 9a.
Figure 10b shows plots of the intensity of the same row of pixels of the diffused image and the Residual intensities from in the same row of pixels in the calibration images of

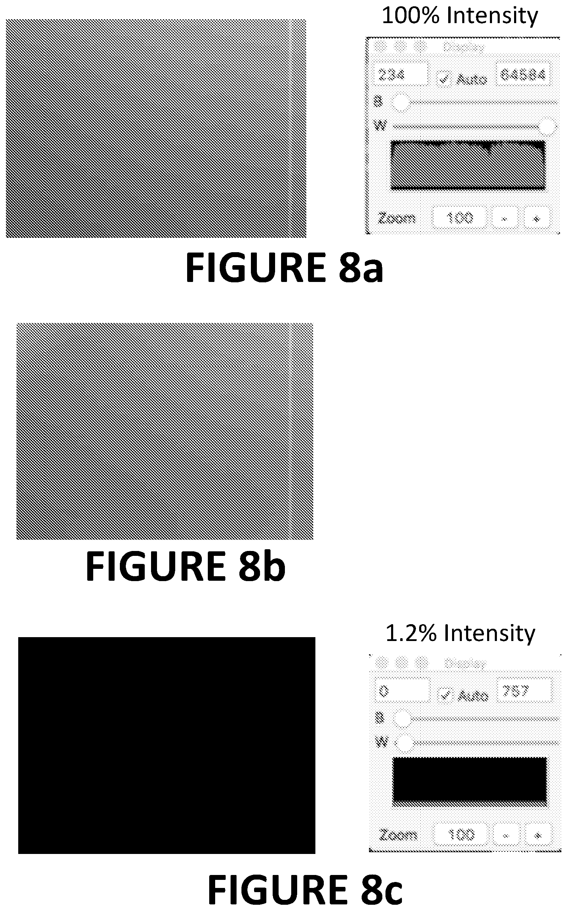

Figures 8a-8c used to perform the Advanced Intrinsic processing.

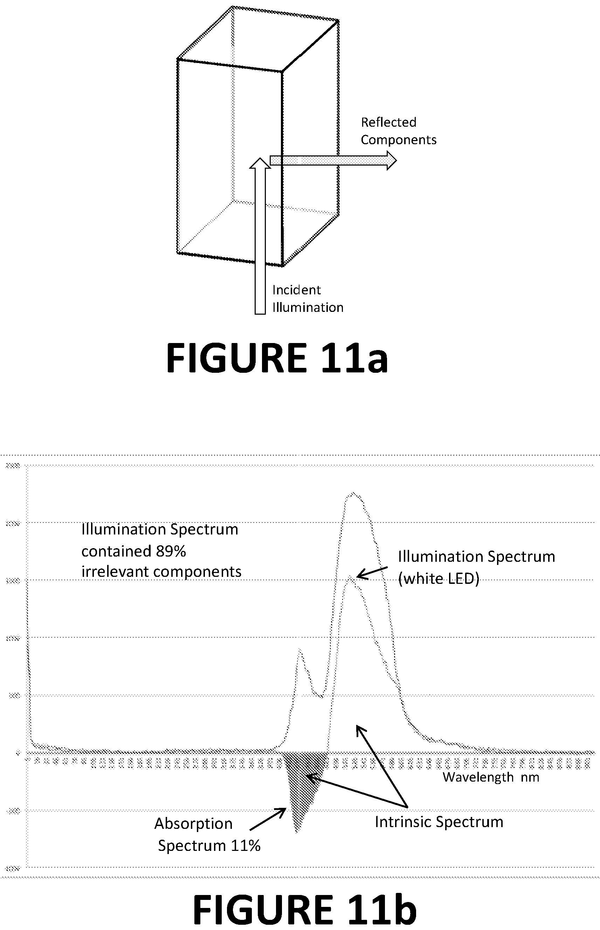

Figure 11a shows the reflection configuration to analyze yellow paper.
Figure 11b shows the spectrum of white LED illumination and the Intrinsic spectrum of the reflected spectral components, where 89 percent of the illumination was determined to be irrelevant and 11 percent of the illumination was absorbed by the yellow paper.

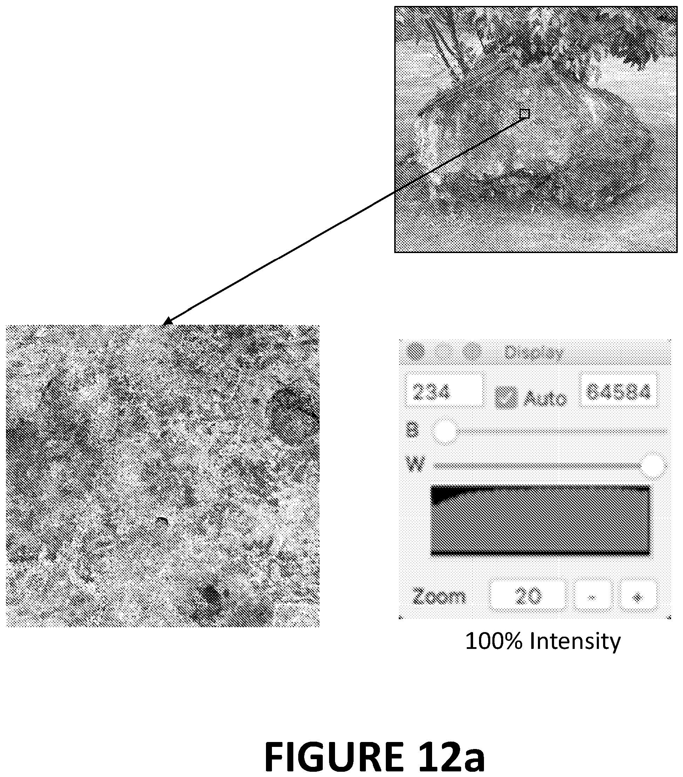

Figure 12a a bolder illuminated by direct sunlight with a close-up focused image of a section of the bolder

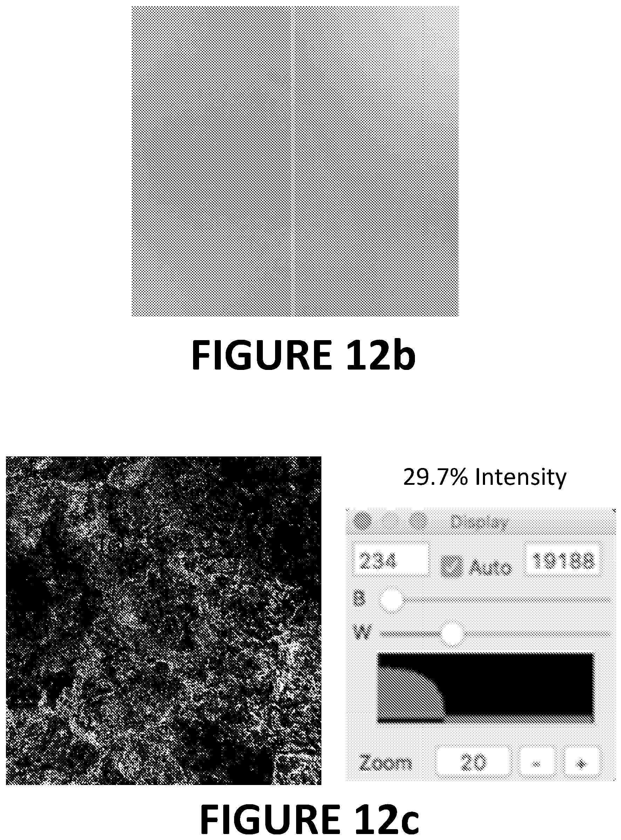

Figure 12b shows the close-up diffused image of the same section of the bolder shown in Figure 12a
Figure 12c shows the same section of the bolder shown in
Figure 12a after Simple Intrinsic processing revealing a complex pattern of fluorescent material, where the highest intensity of the intrinsic image was 29.7 percent of the focused image indicating elimination of 70.3 percent of irrelevant illumination from the image.

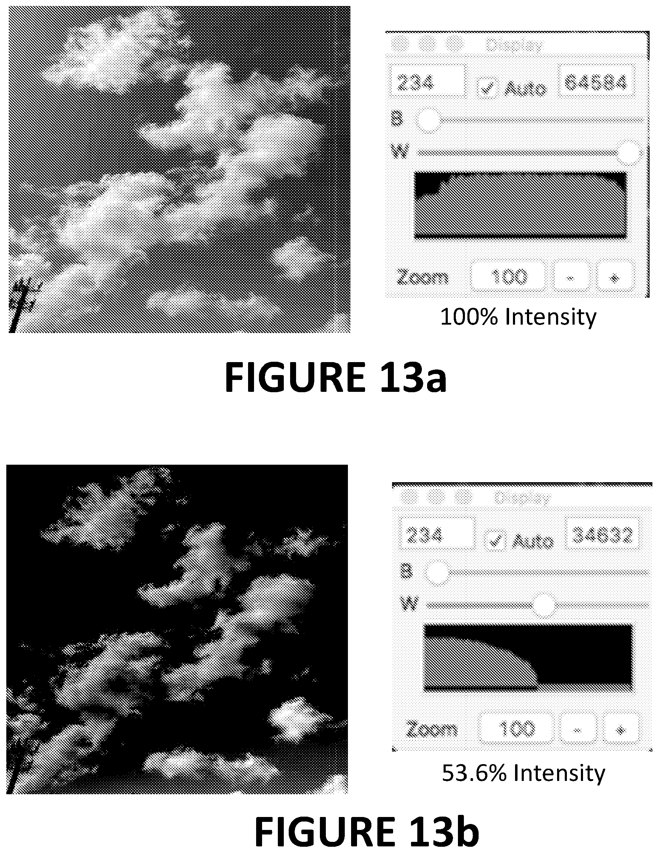

Figure 13a shows a focused image of cumulous clouds.
Figure 13b shows the image of the clouds shown in Figure 13a after Intrinsic processing, where the highest intensity of the intrinsic image was 53.6 percent of the focused image indicating elimination of 46.4 percent of the irrelevant illumination from the image.

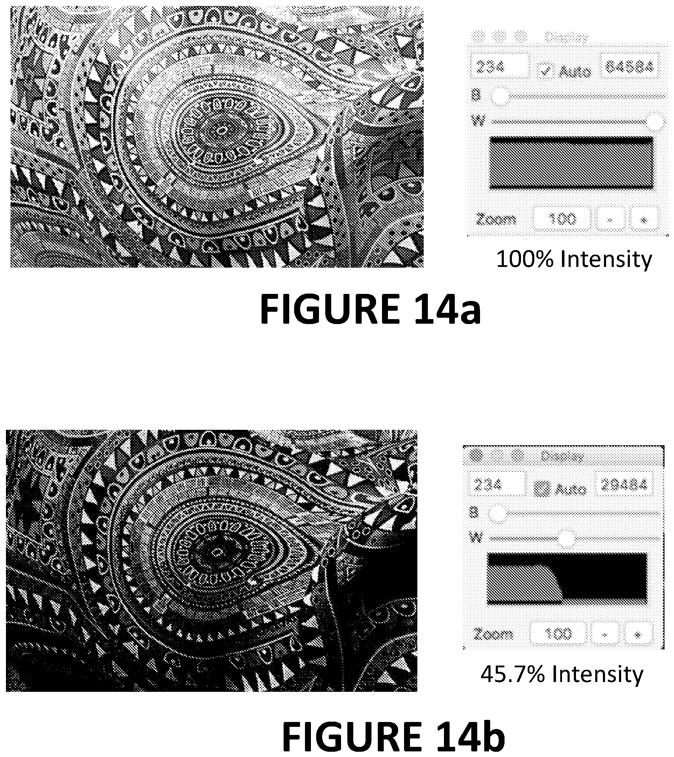

Figure 14a shows a focused image of a colorful complex pattern.
Figure 14b shows an image of the pattern after Simple Intrinsic processing, where the highest intensity of the intrinsic image was 45.7 percent of the focused image indicating elimination of 54.3 percent of the irrelevant illumination from the image.

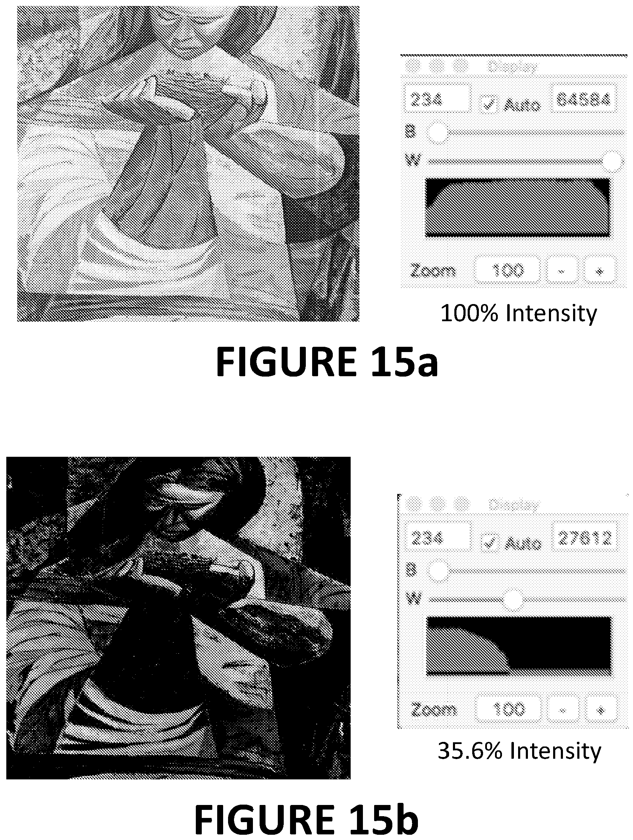

Figure 15a shows a focused image of a reproduction print.
Figure 15b shows an image of the print shown in Figure 15a after Intrinsic processing, where the highest intensity of the intrinsic image was 35.6 percent of the focused image indicating elimination of 64.4 percent of the irrelevant illumination from the image and the intrinsic blue areas appearing washed out in the focused image by the illumination.

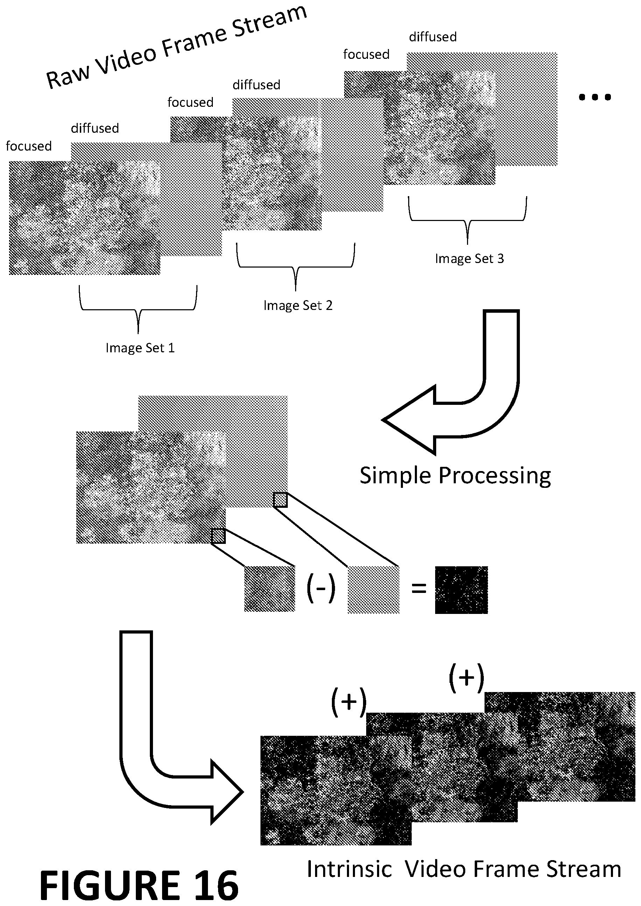

Figure 16 illustrates a method of producing intrinsic video image according to the present invention.

Throughout the figures, the same reference numbers and characters, unless otherwise stated, are used to denote like elements, components, portions or features of the illustrated embodiments. The subject invention will be described in detail in conjunction with the accompanying figures, in view of the illustrative embodiments.

### DETAILED DESCRIPTION OF THE INVENTION

### Apparatus Configurations

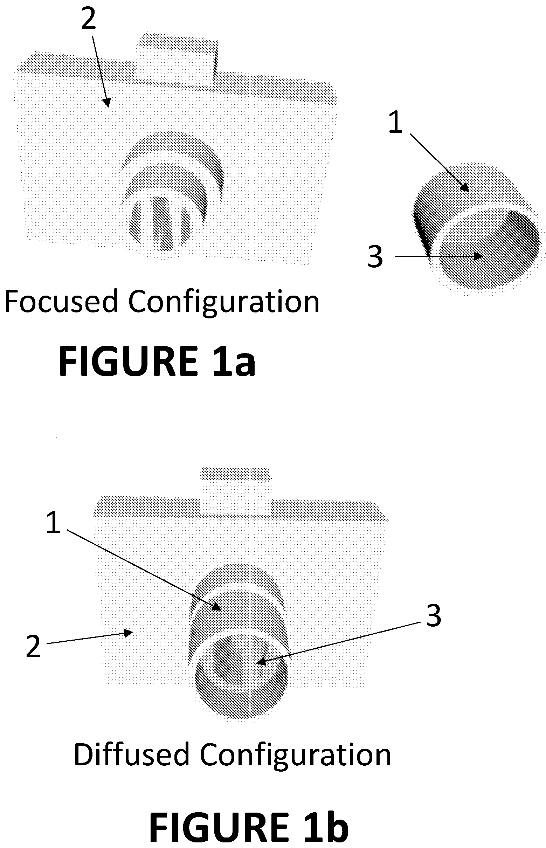

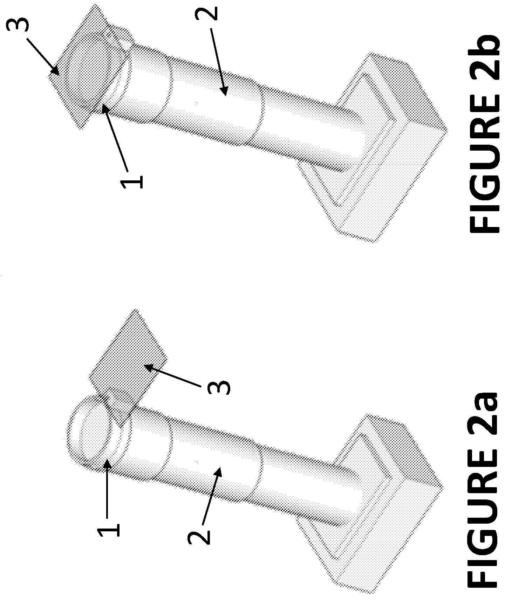

The simplest configuration of the apparatus is where the apparatus 1 containing the translucent material (diffusing element) 3 is placed over the camera 2 to generate a diffused image, as shown in Figures 1a and 1b. Another configuration is achieved by attaching an apparatus 1 that includes the translucent material 3 to the camera 2 so that it is moved into and out of the path between the field of view and the camera lens, as shown in Figures 2a and 2b. This format is appropriate for long lens cameras and telescopes since their optical tube is considered as the lens of the camera.

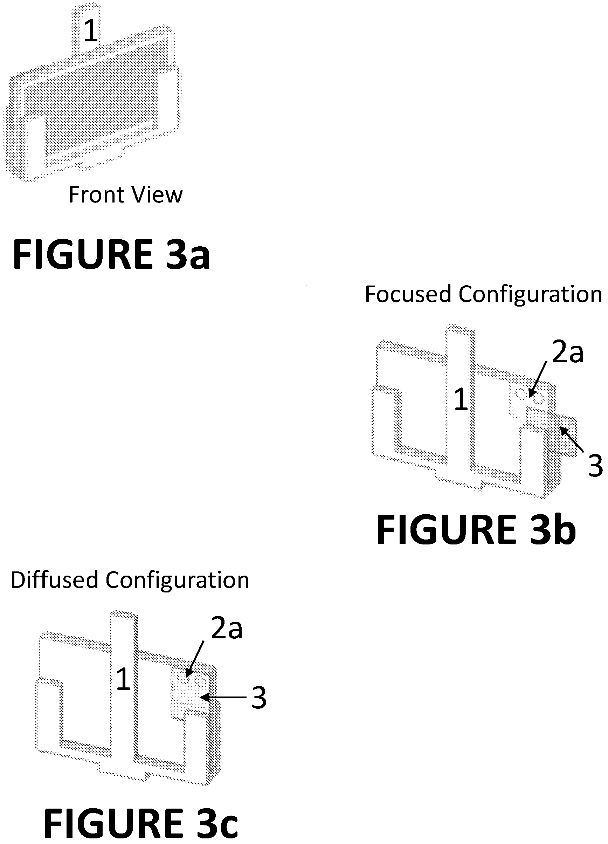

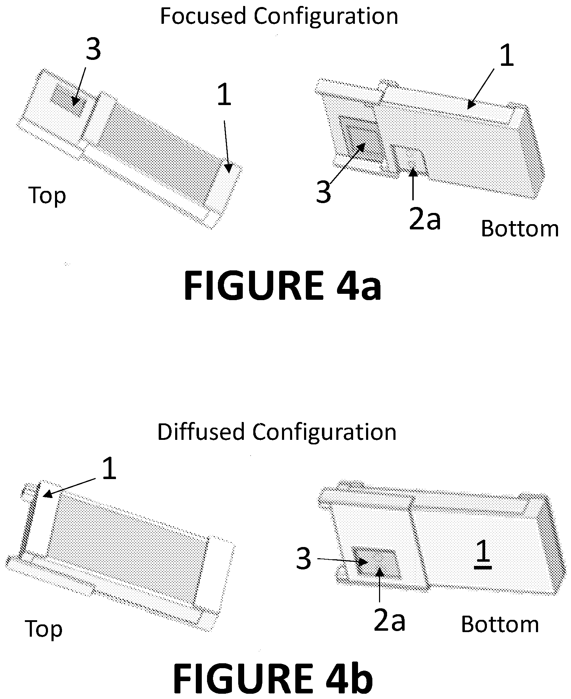

A third configuration of the apparatus is where the apparatus 1 holds the body or casing of the camera and the translucent material 3 is rotatably moved into and out of the path between the camera lens 2a and the field of view. This format is appropriate for use with smart phones and tablets that have self-adjusting cameras 2a, as shown in Figures 3a-3c and Figures 4a-4b, where it is impractical or difficult to attach or incorporate the diffusing element on the camera lens 2a. For the purpose of the invention, rotatably moved means that the diffusing element is rotated or pivoted (in any direction or plane) in relation to the holding apparatus or the camera in order to position the diffusing element in front or away from the camera lens.

The application of the invention to video cameras needs a format to produce a continuous stream of sets of focused and diffused video images. The preferred method includes, but is not limited to, a rotating wheel (synchronizing element) 1a synchronized with the frame rate of the camera 2 so that every other frame produces a focused image followed by a diffused image, or vice versa. This can be achieved by a wheel that is open (passthrough) on one half of the area 3a and covered with a translucent material 3 on the other open half of the wheel. Synchronizing the rotation of this wheel to half speed of the frame rate of the video camera will produce the stream of sequential image sets containing a focused image followed by a diffused image that can be processed by the method of the present invention into an Intrinsic video. For example, the rotating wheel can be operated at 30 rotations per second when a 60 frames per second (fps) video camera is used in order to obtain 60 sequentially alternating focused and diffused images, one image per frame as illustrated in Figure 16. In accordance with the Simple Processing method of the invention, 30 sets of alternating focused and diffused images (total of 60 images) are processed per second where the intensities of the diffused image are subtracted pixel-by-pixel from the intensities of the focused image to obtain an intrinsic video comprising of 30 consecutive intrinsic frames per second that will be played at 30 fps.

For the Advanced Processing, a single Residual image is calculated and stored in memory to be used until a new Residual image is calculated. According to above example, the same calculated Residual image is added to each the 30 diffused images previously obtained to generate 30 adjusted diffused images which in turn are subtracted pixel-by-pixel from the obtained focused images to generate an intrinsic video comprising of 30 consecutive intrinsic frames per second that will be played at 30 fps.

According to an embodiment of the invention, the Residual image can be calculated from a single set of calibration focused and diffused images (for example from a clear sky) obtained through the synchronized rotating wheel as previously explained. Alternatively, a plurality of Residual images can be calculated from a plurality of calibration focused and diffused images sets, where an average Residual image can be calculated by averaging pixel-by-pixel the intensities of all the calculated Residual images. If the video camera also has a still image capturing feature, it is also envisioned that the Residual image can be calculated with a focused and diffused still image obtained by the camera. The calculated Residual image is valid as long as the illumination or translucent material is not changed. Accordingly, for intrinsic video purposes one residual image is enough since the frames of the video are taken under constant conditions.

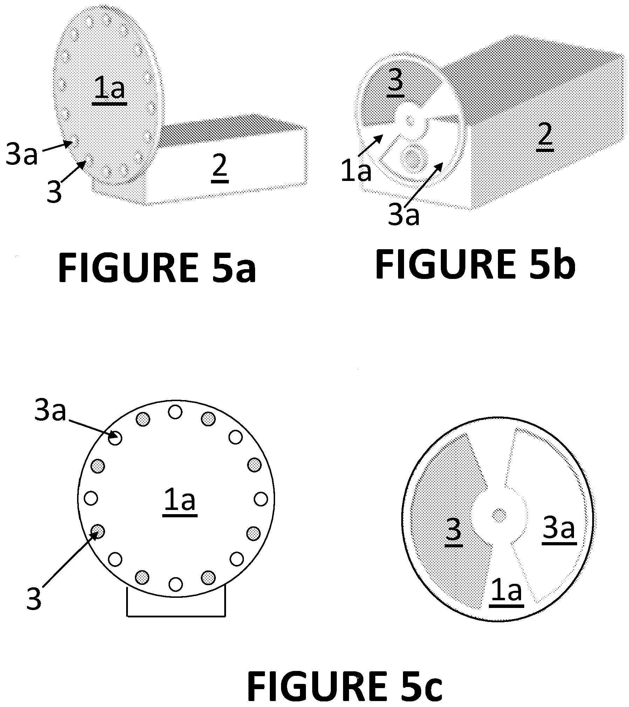

With high video frame rates, the format is extended to a wheel with multiple passthrough holes 3a along its rim with alternating open and translucent coverings 3. These formats of the apparatus are illustrated in Figures 5a-5c. The synchronizing element 1a can also be provided inside the video camera 2. In the preferred embodiment, the synchronizing element 1a is a rotating wheel, but it can also be implemented by other moving mechanisms such as but not limited to pivoting, or linear that allows the video camera 2 to obtain the same set of focused and a diffused video images according to the method of the present invention.

### Intrinsic Image Processing

Images contain many different spectral components including absorption, emission intrinsic reflection and irrelevant illumination. Irrelevant illumination is defined as the illumination components that are not absorbed by the field of view. This irrelevant illumination is a major spectral component and acts like a fog or the noise when considering the process in terms of a signal to noise ratio. Namely, by reducing the "noise", the intrinsic components are revealed.

Classical methods to obtain intrinsic emissions, i.e., fluorescence, of materials require narrow excitation illumination obtained with lasers and narrow band pass filters, followed by eliminating the excitation illumination after it has impinged on the target material using long pass filters and dichroic mirrors. These filters and mirrors eliminate the illumination components that have not been absorbed revealing intrinsic emission.

The previously referenced patents present novel methods, referred to as Intrinsic processing, that accomplish the same result without the use of filters and dichroic mirrors. However, wide wavelength ranges of illumination can cover the whole absorption envelop, such as solar radiation. Under this condition, intrinsic emission is not the only spectral component obtained using Intrinsic processing. Intrinsic processing reveals that there are two components that comprise reflection, total illumination reflection and intrinsic reflection. Illumination reflection reflects the whole wavelength range of the illumination by the materials, and in the case of solar radiation, the reflection is considered white light. Intrinsic reflection is the proportional residual illumination components that are not absorbed by the materials in a field of view. The Intrinsic reflection gives rise to the perceived color of materials even though it might be a small component compared to the total illumination. An analogy to consider is mixing colored paint where relatively small amounts of pigments, i.e., the intrinsic components, produce a brightly colored paint whose base color is white.

The present invention provides two methods to eliminate the irrelevant illumination components: (1) Simple Intrinsic processing where pixel-by-pixel subtraction of intensities of the diffused image from the intensities of the focused image is performed, and (2) Advanced Intrinsic processing where the residual image components are determined using a calibration field of view empty of spatial detail by subtracting pixel-by-pixel the intensities of an obtained calibration diffused image of the field of view empty of spatial detail from the corresponding intensities of an obtained calibration focused image of the same field of view empty of spatial detail to obtain a residual image. The intensities of this residual image are added pixel-by-pixel to the intensities of the diffused image to generate an adjusted diffused image and these in turn are subtracted pixel-by-pixel from the intensities of the focused image.

Much effort has been expended on modeling spectral foreground components such as aerosols, water vapor and particulates to eliminate them from images of distant fields of view, for example, images taken from satellites. The success of the Intrinsic processing methodology of this invention is that the image of the diffused illumination is taken of the same field of view, under the same camera conditions and close to the same time as the focused image. This provides the most accurate real time illumination and foreground data of the field of view to process the focused image.

The Simple Intrinsic method of image processing is considered simple in that the intensities of the diffused image are subtracted pixel-by-pixel from the intensities of the focused image. This removes the irrelevant illumination, as well as, any intensity gradients, such that the intrinsic components are revealed that were otherwise hidden within the total reflected energy.

The Advanced Intrinsic method of image processing is considered advanced since it accounts not only for the irrelevant illumination, but also for loss of illumination energy due to transmission through the translucent material. This advanced method also accounts for any changes in settings, such as automatic adjustment of exposure time and refocusing that may occur in automatic cameras when optimizing the image. This process requires that the camera takes a calibration set of focused and diffused images of a field of view empty of spatial detail and determines the residual image arising from any changes in the camera, as well as, the loss of illumination due to transmission through the translucent material.

The creation of an Intrinsic video can be accomplished real-time or in a post-processing procedure. According to an embodiment of the invention, the Intrinsic video processing first involves identifying the image sets of focused and diffused images obtained, where each set is processed separately to produce an Intrinsic frame. The Intrinsic frames are then streamed or combined sequentially and played at half the frame rate of the original camera to produce the Intrinsic video image according to the present invention, as illustrated in Figure 16.

### EXAMPLES

The following examples present: (1) criteria for the translucent material, (2) analysis of the intrinsic processing, (3) spectral contributions to classical and intrinsic images, and (4) perceived differences of images. Note that all photographic images shown in the figures were taken with the automatic adjusting of an Apple^{®} iPhone^{®} 11 camera.

### Example 1. Translucent Material

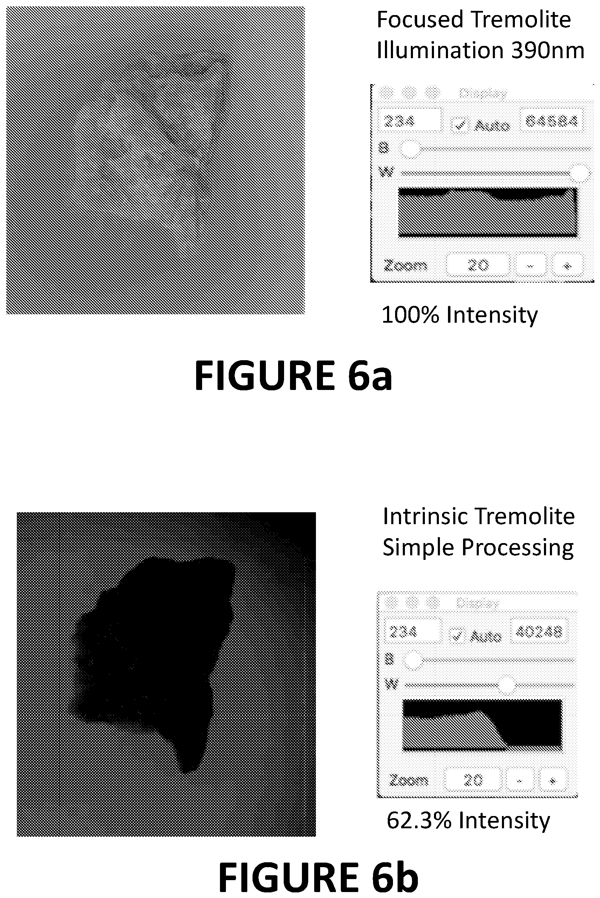

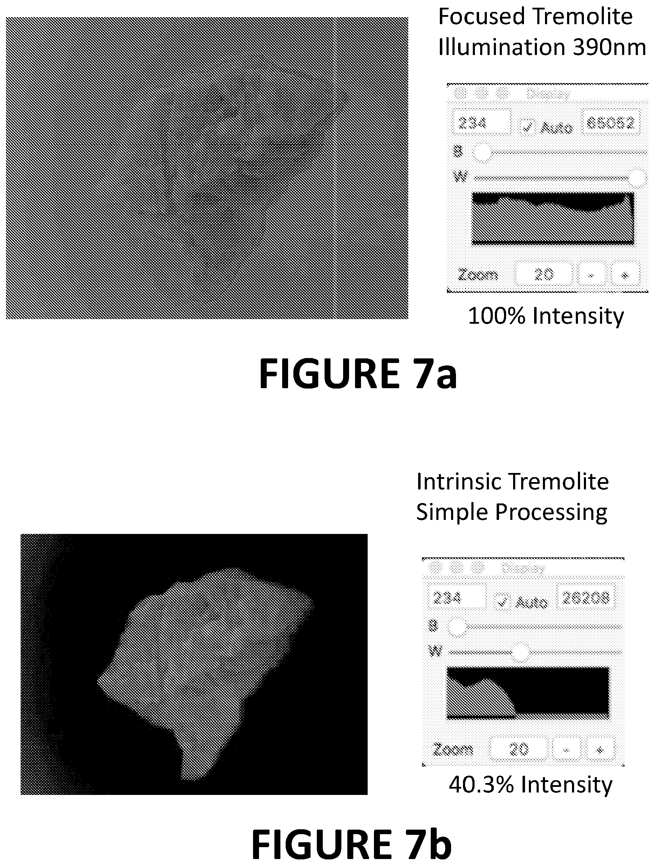

The criteria of two translucent materials were tested and the results presented in Figures 6a-6b and Figures 7a-7b. When white paper was used as the translucent material, the blue irrelevant illumination remained in the Intrinsic image in Figure 6b. This indicates that illumination of 390 nm did not pass through the translucent white paper so as to be eliminated by the Intrinsic processing. In addition, the black appearance of the Tremolite mineral indicates strong absorbance of the 390 nm illumination. However, when polyethylene was used as the translucent material, the translucent criteria were met revealing the mineral fluorescing bright red with the black background indicating that the irrelevant illumination has been eliminated by Intrinsic processing (Figure 7b).

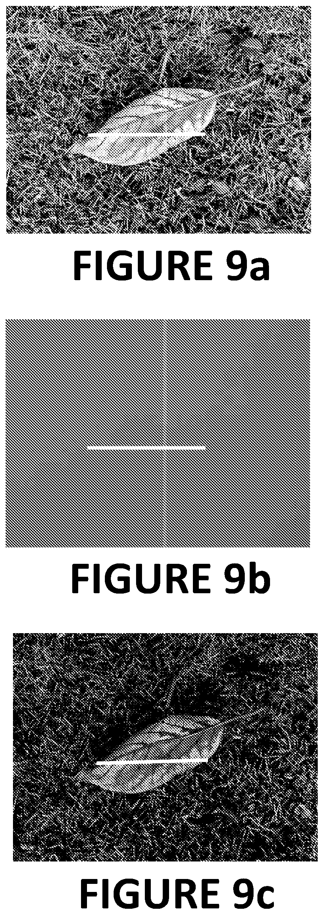

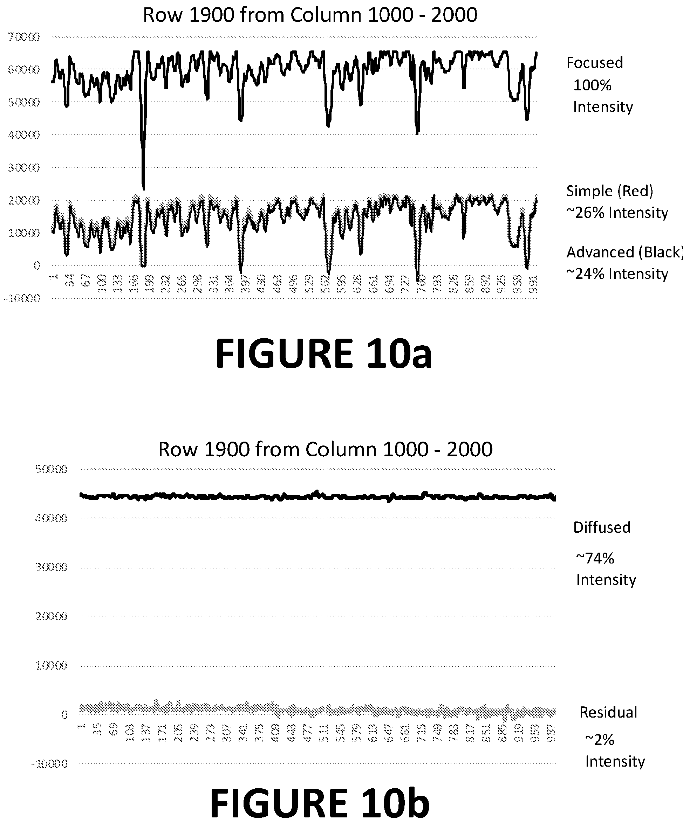

Example 2. Separation of the Spectral Components of an Image The spectral components of the image in Figure 9a have been separated by Intrinsic processing and plotted in Figure 10a over a range of 1000 pixels of row 1900 of the image.

The calibration set of focused and diffused images in Figures 8a and 8b, respectively, were taken of a clear sky to generate the Residual image (Figure 8c) that determines the loss of spectral components when the illumination passes through the translucent material. The intensity of the Residual across the analysis row was determined to be less than 2 percent.

Figures 9a-9c show the set of focused, diffused and Intrinsic images, respectively, of a deteriorating leaf under direct sun light. To gain a qualitative and quantitative understanding of how the spectral components relate to each other, intensity of pixels from row 1900 across columns 1000 - 2000 indicated by the white line, were plotted in Figures 10a-10b. The plots in Figure 10a are the intensities of the pixels of row 1900 of the focused image before and after Simple and Advanced Intrinsic processing. The plots in Figure 10b show the intensities of the diffused and Residual spectral components across this row of pixels when imaged through the translucent material. The intensity plot of the diffused image represents about 74 percent of the intensity of each of the pixels across the analysis range of row 1900 of the focused image. The Residual spectral component represents about 2 percent of the residual intensity of the clear sky calibration images in Figures 8a-8c. Note that in this set of images, the Residual spectral components do not contribute a significant degree to a difference between the Simple and Advanced intrinsic images, as shown in the plots in Figure 10a.

### Example 3. Spectra of Reflected Components

A sample of yellow paper was placed diagonally in a cuvette such that it was illuminated with a white LED at a 45° angle and the reflected energy was detected at an angle of 90 ° from the illumination, as illustrated in Figure 11a. The spectrum in blue represents the complete spectrum of the white LED illumination. The spectrum in red represents the intrinsic spectrum reflected off the yellow paper after the irrelevant illumination components have been eliminated. The portion in the UV/blue/green range of the intrinsic spectrum has negative values indicating the absorption component from the white LED illumination (Figure 11b). This absorption was found to be 11 percent of the integrated illumination. The proportions of the intrinsic spectrum in the yellow/red range have positive values, representing components greater than 11 percentage of the expected reflected residual illumination. It appears that the sample of yellow paper had fluorescence properties where the emission components provided a significant amount of the positive portion of the intrinsic spectrum. With respect to the intrinsic spectrum, 89 percent of the illumination was not absorbed, considered irrelevant and eliminated by the intrinsic processing algorithms.

### Example 4. Perceived Differences between the Normal Focused and Intrinsic Images

The focused images appear close to how the field of view is normally perceived by eye. However, Intrinsic processing produces darker images with more intense colors. This is because the irrelevant illumination components have been eliminated from the image leaving only the intrinsic spectral components reflected, as seen in the fluorescence image in Figures 12c and the intrinsic reflective images in Figures 13b - 15b. These images trend to support the paint mixing analogy where the intensity of the perceived color is derived from a small amount of the intrinsic components serving as the pigments within the white base of illumination. In addition, the regional boundaries within the Intrinsic images appear to be sharper than in the focused image.

Although the present invention has been described herein with reference to the foregoing exemplary embodiment, this embodiment does not serve to limit the scope of the present invention. Accordingly, those skilled in the art to which the present invention pertains will appreciate that various modifications are possible, without departing from the claimed invention.

## Claims

1. A method to obtain intrinsic images with an image capturing device comprising:
obtaining a photographic or video focused image and a photographic or video diffused image of a same field of view of interest, said photographic or video diffused image is obtained by positioning a translucent material in a path between the field of view of interest and a lens of an image capturing device, wherein said translucent material is selected so that the photographic or video diffused image has a same illumination intensity distribution with a same intensity gradient as the photographic or video focused image so that the photographic or video diffused image is free from any spatial features of the focused image; and
subtracting an intensity of each pixel of the photographic or video diffused image from a corresponding intensity of a pixel of the photographic or video focused image to obtain a photographic or video intrinsic image of said field of view of interest free of irrelevant illumination.

2. The method of claim 1, wherein positioning said translucent material in said path is manually controlled, mechanically controlled or a combination thereof.

3. The method of claim 1, wherein the focused video image and the diffused video image are obtained through a synchronizing element comprising at least one translucent material and an equal number of passthrough openings.

4. The method of claim 3, wherein a number of translucent materials and passthrough openings of said synchronizing element is defined by a frame rate of an image capturing device that obtains said focused video image and said diffused video image.

5. The method of claim 3, wherein movement of said synchronizing element is synchronized to half speed of a frame rate of an image capturing device and a plurality of sets of sequentially alternating focused and diffused video images is obtained, each image corresponding to a sequential frame of a video from the field of view of interest.

6. The method of claim 5, wherein each set of diffused video image is subtracted from its corresponding focused video image to generate a number of intrinsic video frames that are sequentially combined to generate an intrinsic video image.

7. The method of claim 6, wherein said intrinsic video image is reproduced at a rate equal to the number of said intrinsic video frames per second.

8. The method of claim 1, wherein said translucent material does not have fluorescent properties.

9. A method to obtain intrinsic images comprising:
obtaining a calibration focused image and a calibration diffused image of a same field of view empty of spatial detail, said calibration diffused image is obtained by positioning a translucent material in a path between the field of view empty of spatial detail and a lens of an image capturing device;
subtracting an intensity of each pixel of the calibration diffused image from a corresponding intensity of a pixel of the calibration focused image to obtain a residual image;
obtaining a photographic or video focused image and a photographic or video diffused image of a same field of view of interest, said photographic or video diffused image is obtained by positioning the translucent material in a path between the field of view of interest and the lens of the image capturing device, wherein said translucent material is selected so that the photographic or video diffused image has a same illumination intensity distribution with a same intensity gradient as the photographic or video focused image so that the photographic or video diffused image is free from any spatial features of the focused image;
adding an intensity of each pixel of the residual image to a corresponding intensity of the pixel of the photographic or video diffused image to obtain an adjusted diffused image; and
subtracting an intensity of each pixel of the adjusted diffused image from a corresponding intensity of a pixel of the photographic or video focused image to obtain a photographic or video intrinsic image of the field of view of interest free of irrelevant illumination.

## Patentansprüche

1. Verfahren zur Gewinnung intrinsischer Bilder mit einem Bildaufnahmegerät, umfassend:
Aufnehmen eines fotografischen oder Video-fokussierten Bildes und eines fotografischen oder Video-diffusen Bildes desselben interessierenden Sichtfelds, wobei das fotografische oder Video-diffuse Bild erhalten wird, indem ein transluzentes Material in einem Pfad zwischen dem interessierenden Sichtfeld und einem Objektiv eines Bildaufnahmegeräts positioniert wird, wobei das transluzente Material so ausgewählt wird, dass das fotografische oder Video-diffuse Bild dieselbe Beleuchtungsintensitätsverteilung mit demselben Intensitätsgradienten wie das fotografische oder Videofokussierte Bild aufweist, so dass das fotografische oder Video-diffuse Bild frei von jeglichen räumlichen Merkmalen des fokussierten Bildes ist; und
Subtrahieren einer Intensität jedes Pixels des fotografischen oder Video-diffusen Bildes von einer entsprechenden Intensität eines Pixels des fotografischen oder Video-fokussierten Bildes, um ein fotografisches oder Video-intrinsisches Bild des interessierenden Sichtfelds frei von irrelevanter Beleuchtung zu erhalten.

2. Verfahren nach Anspruch 1, wobei das Positionieren des transluzenten Materials in dem Pfad manuell gesteuert, mechanisch gesteuert oder eine Kombination davon ist.

3. Verfahren nach Anspruch 1, wobei das fokussierte Videobild und das diffuse Videobild durch ein Synchronisierungselement erhalten werden, das mindestens ein transluzentes Material und eine gleiche Anzahl von Durchlassöffnungen umfasst.

4. Verfahren nach Anspruch 3, wobei eine Anzahl von transluzenten Materialien und Durchlassöffnungen des Synchronisierungselements durch eine Bildrate eines Bildaufnahmegeräts definiert wird, das das fokussierte Videobild und das diffuse Videobild aufnimmt.

5. Verfahren nach Anspruch 3, wobei eine Bewegung des Synchronisierungselements auf die halbe Geschwindigkeit einer Bildrate eines Bildaufnahmegeräts synchronisiert wird und eine Vielzahl von Sätzen sequentiell abwechselnder fokussierter und diffuser Videobilder erhalten wird, wobei jedes Bild einem sequentiellen Frame eines Videos vom interessierenden Sichtfeld entspricht.

6. Verfahren nach Anspruch 5, wobei jeder Satz von diffusen Videobildern von seinem entsprechenden fokussierten Videobild subtrahiert wird, um eine Anzahl von intrinsischen Videoframes zu erzeugen, die sequentiell kombiniert werden, um ein intrinsisches Videobild zu erzeugen.

7. Verfahren nach Anspruch 6, wobei das intrinsische Videobild mit einer Rate wiedergegeben wird, die der Anzahl der intrinsischen Videoframes pro Sekunde entspricht.

8. Verfahren nach Anspruch 1, wobei das transluzente Material keine fluoreszierenden Eigenschaften aufweist.

9. Verfahren zur Gewinnung intrinsischer Bilder, umfassend:
Aufnehmen eines fokussierten Kalibrierungsbildes und eines diffusen Kalibrierungsbildes desselben Sichtfelds ohne räumliche Details, wobei das diffuse Kalibrierungsbild erhalten wird, indem ein transluzentes Material in einem Pfad zwischen dem Sichtfeld ohne räumliche Details und einem Objektiv eines Bildaufnahmegeräts positioniert wird;
Subtrahieren einer Intensität jedes Pixels des diffusen Kalibrierungsbildes von einer entsprechenden Intensität eines Pixels des fokussierten Kalibrierungsbildes, um ein Restbild zu erhalten;
Aufnehmen eines fotografischen oder Video-fokussierten Bildes und eines fotografischen oder Video-diffusen Bildes desselben interessierenden Sichtfelds, wobei das fotografische oder Video-diffuse Bild erhalten wird, indem das transluzente Material in einem Pfad zwischen dem interessierenden Sichtfeld und dem Objektiv des Bildaufnahmegeräts positioniert wird, wobei das transluzente Material so ausgewählt wird, dass das fotografische oder Video-diffuse Bild dieselbe Beleuchtungsintensitätsverteilung mit demselben Intensitätsgradienten wie das fotografische oder Videofokussierte Bild aufweist, so dass das fotografische oder Video-diffuse Bild frei von jeglichen räumlichen Merkmalen des fokussierten Bildes ist;
Addieren einer Intensität jedes Pixels des Restbildes zu einer entsprechenden Intensität des Pixels des fotografischen oder Video-diffusen Bildes, um ein angepasstes diffuses Bild zu erhalten; und
Subtrahieren einer Intensität jedes Pixels des angepassten diffusen Bildes von einer entsprechenden Intensität eines Pixels des fotografischen oder Video-fokussierten Bildes, um ein fotografisches oder Video-intrinsisches Bild des interessierenden Sichtfelds frei von irrelevanter Beleuchtung zu erhalten.

## Revendications

1. Procédé pour obtenir des images intrinsèques avec un dispositif de capture d'images comprenant :
l'obtention d'une image photographique ou vidéo mise au point et d'une image photographique ou vidéo diffusée d'un même champ de vision d'intérêt, ladite image photographique ou vidéo diffusée étant obtenue en positionnant un matériau translucide dans un chemin entre le champ de vision d' intérêt et un objectif d'un dispositif de capture d'images, dans lequel ledit matériau translucide est sélectionné de sorte que l'image photographique ou vidéo diffusée ait une même distribution d'intensité d'éclairage avec un même gradient d'intensité que l'image photographique ou vidéo mise au point de sorte que l'image photographique ou vidéo diffusée soit exempte de toute caractéristique spatiale de l'image mise au point ; et
la soustraction d'une intensité de chaque pixel de l'image photographique ou vidéo diffusée d'une intensité correspondante d'un pixel de l'image photographique ou vidéo mise au point pour obtenir une image photographique ou vidéo intrinsèque dudit champ de vision d'intérêt exempte d'éclairage non pertinent.

2. Procédé selon la revendication 1, dans lequel le positionnement dudit matériau translucide dans ledit chemin est contrôlé manuellement, contrôlé mécaniquement ou une combinaison de ceux-ci.

3. Procédé selon la revendication 1, dans lequel l'image vidéo mise au point et l'image vidéo diffusée sont obtenues à travers un élément de synchronisation comprenant au moins un matériau translucide et un nombre égal d'ouvertures de passage direct.

4. Procédé selon la revendication 3, dans lequel un nombre de matériaux translucides et d'ouvertures de passage direct dudit élément de synchronisation est défini par une cadence d'images d'un dispositif de capture d'images qui obtient ladite image vidéo mise au point et ladite image vidéo diffusée.

5. Procédé selon la revendication 3, dans lequel le mouvement dudit élément de synchronisation est synchronisé à la moitié de la vitesse d'une cadence d'images d'un dispositif de capture d'images et une pluralité d'ensembles d'images vidéo mises au point et diffusées alternées séquentiellement est obtenue, chaque image correspondant à une trame séquentielle d'une vidéo du champ de vision d'intérêt.

6. Procédé selon la revendication 5, dans lequel chaque ensemble d'image vidéo diffusée est soustrait de son image vidéo mise au point correspondante pour générer un nombre de trames vidéo intrinsèques qui sont combinées séquentiellement pour générer une image vidéo intrinsèque.

7. Procédé selon la revendication 6, dans lequel ladite image vidéo intrinsèque est reproduite à un taux égal au nombre desdites trames vidéo intrinsèques par seconde.

8. Procédé selon la revendication 1, dans lequel ledit matériau translucide n'a pas de propriétés fluorescentes.

9. Procédé pour obtenir des images intrinsèques comprenant:
l'obtention d'une image d'étalonnage mise au point et d'une image d'étalonnage diffusée d'un même champ de vision vide de détails spatiaux, ladite image d'étalonnage diffusée étant obtenue en positionnant un matériau translucide dans un chemin entre le champ de vision vide de détails spatiaux et un objectif d'un dispositif de capture d'images ;
la soustraction d'une intensité de chaque pixel de l'image d'étalonnage diffusée d'une intensité correspondante d'un pixel de l'image d'étalonnage mise au point pour obtenir une image résiduelle ;
l'obtention d'une image photographique ou vidéo mise au point et d'une image photographique ou vidéo diffusée d'un même champ de vision d'intérêt, ladite image photographique ou vidéo diffusée étant obtenue en positionnant le matériau translucide dans un chemin entre le champ de vision d' intérêt et l'objectif du dispositif de capture d'images, dans lequel ledit matériau translucide est sélectionné de sorte que l'image photographique ou vidéo diffusée ait une même distribution d'intensité d'éclairage avec un même gradient d'intensité que l'image photographique ou vidéo mise au point de sorte que l'image photographique ou vidéo diffusée soit exempte de toute caractéristique spatiale de l'image mise au point ;
l'addition d'une intensité de chaque pixel de l'image résiduelle à une intensité correspondante du pixel de l'image photographique ou vidéo diffusée pour obtenir une image diffusée ajustée ; et
la soustraction d'une intensité de chaque pixel de l'image diffusée ajustée d'une intensité correspondante d'un pixel de l'image photographique ou vidéo mise au point pour obtenir une image photographique ou vidéo intrinsèque du champ de vision d'intérêt exempte d'éclairage non pertinent.
